**Europäisches Patentamt**

**European Patent Office**

**Office européen des brevets**

(11) Veröffentlichungsnummer: **0 324 903 B1**

# (12) EUROPÄISCHE PATENTSCHRIFT

(45) Veröffentlichungstag der Patentschrift: **07.10.92**

(21) Anmeldenummer: **88117823.0**

(22) Anmeldetag: **26.10.88**

(51) Int. Cl.⁵: **F16L 39/00**

(54) **Lösbare Verbindung einer Armatur mit einer Rohrleitung.**

(30) Priorität: **21.01.88 DE 3801599**

(43) Veröffentlichungstag der Anmeldung:
**26.07.89 Patentblatt 89/30**

(45) Bekanntmachung des Hinweises auf die
Patenterteilung:
**07.10.92 Patentblatt 92/41**

(84) Benannte Vertragsstaaten:
**AT BE CH DE ES FR GB GR IT LI LU NL SE**

(56) Entgegenhaltungen:
**EP-A- 0 148 813      DE-A- 1 775 258**
**DE-B- 20 735      DE-B- 22 950**
**DE-C- 974 791      DE-U- 1 685 525**
**DE-U- 1 696 916      US-A- 3 856 334**

(73) Patentinhaber: **WILO GmbH**
**Nortkirchenstrasse 100**
**W-4600 Dortmund 30(DE)**

(72) Erfinder: **Naasner, Günter**
**Oberschlesienstrasse 29**
**W-4600 Dortmund 1(DE)**
Erfinder: **Strelow, Günter**
**Vierhausstrasse 73**
**W-4630 Bochum(DE)**

(74) Vertreter: **Cohausz & Florack Patentanwälte**
**Postfach 14 01 61 Schumannstrasse 97**
**W-4000 Düsseldorf 1(DE)**

## Beschreibung

Die Erfindung betrifft eine lösbare Verbindung einer Armatur, insbesondere eines Absperrorgans oder einer Meßvorrichtung mit einer Rohrleitung, die einen Zu- und Abführungsleitungsteil aufweist, die in einem Anschlußteil münden.

Es ist bekannt, Absperrorgane und Meßvorrichtungen in Rohrleitungen durch Flansche zu befestigen, wobei meist auf gegenüberliegenden Seiten Stutzen aus den Absperrorganen oder Meßvorrichtungen austreten, die an ihren Enden Flansche besitzen, die mit Flanschen der Rohrleitungen verbunden werden. Ferner ist es bekannt, Absperrorgane und Meßvorrichtungen zwischen den Enden von Rohrleitungen einzuschweißen oder anzuschrauben. In all diesen Fällen liegen die Absperrorgane und Meßvorrichtungen hintereinander in der Rohrleitung, und es sind zahlreiche Verbindungsstellen notwendig, die einen erheblichen Arbeitsaufwand und Platzbedarf erfordern.

Aus der DE-B-K 20735 XII/47f ist eine lösbare Verbindung bekannt, bei der Zu- und Abfluß in einem einzigen Anschlußstückmünden. Das Anschlußstück bildet hierbei ein Zwischenteil, das in unterschiedlichen Bauarten angeboten wird, um unterschiedliche Bauweisen der Anschlüsse zu überbrücken. Die Befestigungen erfolgen über übliche Flansche und es kommt zu einer großen Baulänge in axialer Richtung.

Aufgabe der Erfindung ist es, eine lösbare Verbindung der eingangs genannten Art zu schaffen, die einfach herzustellen und zu montieren ist und kleine Außenabmessungen besitzt.

Diese Aufgabe wird erfindungsgemäß dadurch gelöst,
- daß das Anschlußteil eine ebene Platte (5) aufweist,
- daß die Enden des Zu- und Abführungsteiles (1, 2) Mündungsöffnungen (3, 4) bilden, die in der den Leitungen abgewandten Vorderseite (6) der Platte (5) liegen, und
- daß die Armatur (7, 8) mindestens eine ebene Seitenfläche (9, 11) besitzt, die unmittelbar an der Vorderseite (6) der Platte (5) anliegend befestigbar ist, wobei die Seitenwand bzw. Seitenfläche (9, 11) der Armatur eine Ein- und Auslaßöffnung (12, 13) besitzt, die mit den Mündungsöffnungen (3, 4) der Vorderseite (6) der Platte (5) übereinstimmen.

Bei dieser Konstruktion muß nur ein Teil in Form der Leitungsplatte in die Rohrleitung dazwischengesetzt werden, an der dann alle erforderliche Armaturen hintereinander befestigt werden können. Die Leitung weist damit nur zwei Verbindungsstellen auf, und alle anderen Verbindungen erfolgen zwischen den Armaturen und der Leitungsplatte bzw. zwischen den Armaturen untereinander. Hierdurch sind Konstruktion und Montage besonders einfach, und auch ein Auswechseln von Armaturen erfordert nur einen geringen Arbeitsaufwand. Ferner erfordern alle Armaturen zusammen nur nur wenig Platz, da sie eng aneinanderliegen können.

Vorzugsweise wird vorgeschlagen, daß in der Vorderseite der Leitungsplatte mehrere Leitungen münden und die ebene Armaturenseitenfläche mehrere damit übereinstimmende Öffnungen besitzt.

Auch wird vorgeschlagen, daß an der Armatur auf der der Rohrleitung abgewandten Seite mindestens eine weitere Armatur befestigt ist. Hierbei können die Armaturen jeweils zwei zueinander parallele Seitenflächen zum Anschluß aufweisen, die Ein- und Auslaßöffnungen aufweisen.

Besonders vorteilhaft ist es, wenn die am weitesten außen befestigte Armatur ein Gehäuse mit einem Umlenkkanal oder einer Kammer aufweist, der die Mündungsöffnungen oder die Öffnungen dazwischen geschalteter Armaturen oder der Leitungsplatte miteinander verbindet. Eine einfache und schnelle Montage ist dann gewährleistet, wenn die Armaturen durch Bajonettverschluß an der Leitungsplatte und/oder an Armaturen befestigt sind.

Vorzugsweise wird vorgeschlagen, daß zwischen der Armatur und der Leitungsplatte ein Teil befestigt ist, das um ein mit dem Einlaß fluchtendes Rohr eine koaxiale Ringkammer bildet, die mit dem Auslaß und dem Einlaß der Verbrauchsvorrichtung verbindbar ist. Einfachste Konstruktion und Montage sind dann gewährleistet, wenn alle scheibenförmigen Armaturen um eine Achse klappsymmetrisch sind, die senkrecht zur Leitungsachse ist. Besonders vorteilhaft ist es, wenn auf der Rückseite der Leitungsplatte Rohrabschnitte befestigt sind, die an die Leitungsenden angeschweißt, angeschraubt oder angelötet sind. Vorzugsweise wird vorgeschlagen, daß die Armatur ein Absperrorgan, eine Meßvorrichtung, ein Entlüfter, ein Schmutzfänger, ein Vordrallregler, ein Strömungsteiler, ein Mischer, ein Vorratsbehälter oder ein Heizgerät ist.

Eine hohe Stabilität der Rohrleitung als auch ein leichtes Auswechseln und Montieren der Leitungsplatte wird dadurch erreicht, wenn die Zu- und Abführungsleitungsteile auf der Rückseite der Leitungsplatte durch ein Profil, insbesondere ein Flachprofil, aneinander befestigt sind. Ein Ausführungsbeispiel der Erfindung ist in den Zeichnungen dargestellt und wird im folgenden näher beschrieben. Es zeigen:

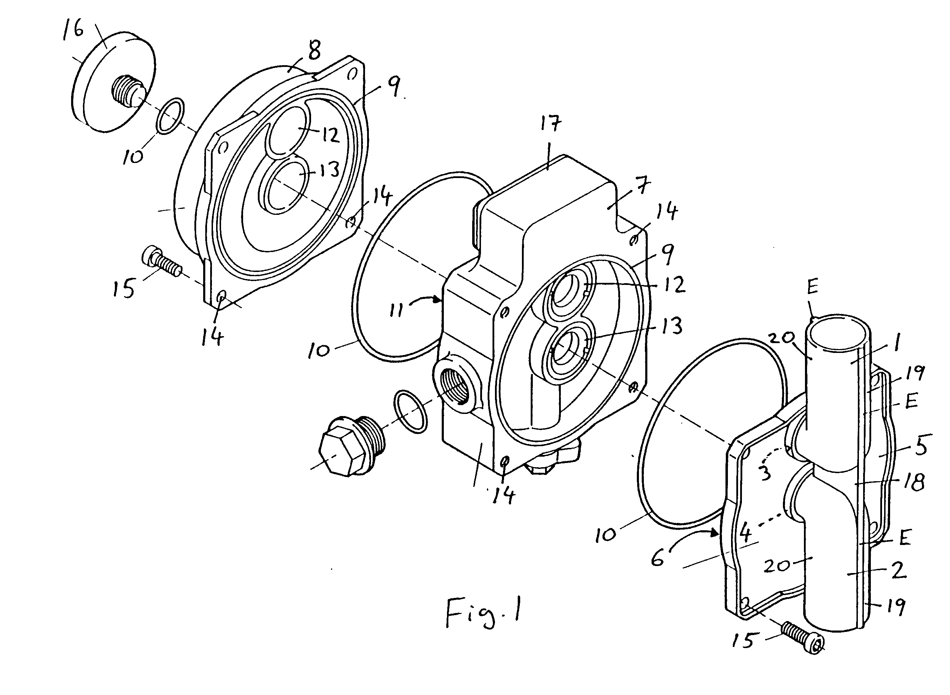

Fig. 1    eine perspektivische Darstellung der Verbindung mit axial auseinandergezogenen Teilen;

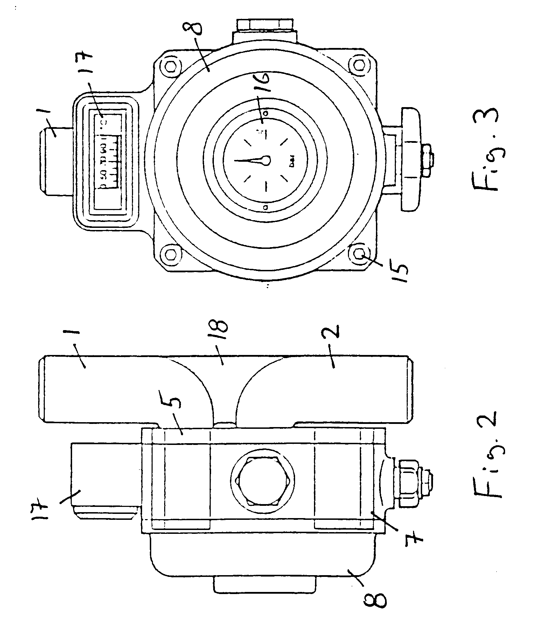

Fig. 2    eine Seitenansicht der gesamten Vorrichtung in der Verbindungstechnik;

Fig. 3    eine Vorderansicht der Vorrichtung;

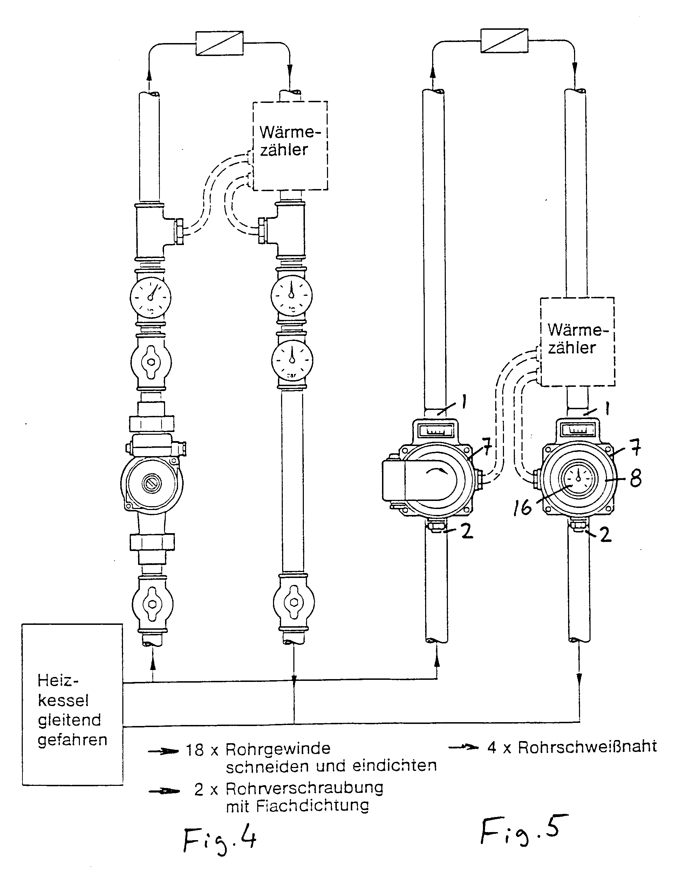

Fig. 4 eine Vorderansicht von Verbindungen entsprechend dem Stand der Technik; und

Fig. 5 eine Vorderansicht zweier in Rohrleitungen eingesetzter erfindungsgemäßer Verbindungen.

Von einer in diesem Ausführungsbeispiel senkrecht dargestellten Rohrleitung ist ein oberer Rohrabschnitt 1 und ein unterer Rohrabschnitt 2 gezeigt. Hier kann der obere Abschnitt 1 als oberer Leitungsteil die Zuführung und der untere Abschnitt 2 als unterer Leitungsteil die Abführung des strömenden Mediums sein. Die Enden der miteinander fluchtenden Rohrabschnitte 1, 2 sind rechtwinklig abgebogen und bilden Mündungsöffnungen 3, 4, die in der Vorderfläche einer ebenen Leitungsplatte 5 liegen. Die Leitungsplatte 5 ist an den Rohrabschnitten 1, 2 befestigt, insbesondere angeschweißt oder angeschraubt. Die etwa rechteckförmige Leitungsplatte 5 besitzt damit eine vordere ebene, etwa rechteckförmige Fläche bzw. Vorderseite 6, in der zwei oder in nicht dargestellten Ausführungsbeispielen mehrere Leitungen münden.

An der Vorderseite 6 sind Armaturen 7, 8 befestigbar, die ebene Seitenflächen 9 aufweisen. Nach der Befestigung liegt die Seitenfläche 9 an der Vorderseite 6 parallel direkt an, wobei eine Dichtung, insbesondere ein O-Ring 10, dazwischen liegen kann. Im Ausführungsbeispiel ist die Armatur 7 scheibenförmig, d.h. sie weist eine erste ebene Seitenfläche 9 und eine zweite dazu parallele ebene Seitenfläche 11 auf, die auf der gegenüberliegenden Seite der Armatur 7 sich befindet, wobei beide Seitenflächen 9, 11 zueinander parallel sind. Die Armatur 7 kann die verschiedensten Funktionen besitzen, insbesondere ein Absperrorgan, eine Meßvorrichtung, eine Tauchhülse oder eine Entlüftungsvorrichtung sein. An der Seitenfläche 11 können noch weitere Armaturen angeschlossen werden, wobei die äußerste Armatur eine Endarmatur 8 ist, die wiederum eine ebene Seitenfläche 9 aufweist und in der Einlaßöffnung 12 und Auslaßöffnung 13 miteinander im Gehäuse der Endarmatur 8 verbunden sind.

Die Einlaß- und Auslaßöffnungen 12, 13 aller Armaturen 7, 8 liegen koaxial zu den Mündungsöffnungen 3, 4 der Leitungsplatte 5. Ferner liegen die Ränder der Einlaß- und Auslaßöffnungen 12, 13 in der jeweiligen Ebene der Seitenflächen 9, 11, so daß allein durch ein Aneinanderbefestigen der Seitenflächen 6, 9, 11 der Armaturen und der Leitungsplatte aneinander die Öffnungen 3, 4, 12, 13 aneinander abdichtend zur Anlage kommen, wobei zwischen aneinanderliegenden Öffnungen Dichtungen, insbesondere Dichtungsringe liegen können. Hierdurch führt eine Befestigung der Armaturen 7, 8 und der Leitungsplatte 5 aneinander zu einer dichtenden Verbindung der Leitungen miteinander, so daß das durch den Rohrabschnitt 1 ankommende Medium durch die Armatur oder Armaturen 7 bis zur Endarmatur 8 fließt, dort umgelenkt wird und durch dieselben Armaturen wieder zurückfließt bis zum unteren Rohrabschnitt 2. Die ebene Armaturenseitenfläche 9, 11 weist eine ringförmige Nut auf, in der der O-Ring 10 einliegt, der direkt oder über ein Dichtmittel 10 an der Leitungsplatte 5 zur Anlage gelangt. Die Armaturen 7 sind durch Bajonettverschluß an der Leitungsplatte 5 und/oder an Armaturen 7, 8 befestigt. Die Zu- und Abführungsleitungsteile 1, 2 auf der Rückseite der Leitungsplatte 5 sind durch ein Propfil, insbesondere ein Flachprofil 18, aneinander befestigt.

Es können damit bei geringstem Montageaufwand kompakte Geräte und Anlagen geschaffen und auf einfachste Weise an eine oder mehrere Leitungen angeschlossen werden. Besonders vorteilhaft ist es, wenn die Armatur 7, 8 ein Absperrorgan, eine Meßvorrichtung, ein Entlüfter, ein Schmutzfänger, ein Vordrallregler, ein Strömungsteiler, ein Mischer, ein Vorratsbehälter oder ein Heizgerät ist.

Im Ausführungsbeispiel sind die Seitenflächen 6, 9, 11 rechteckförmig und weisen Bohrungen 14 auf, die durch die Armaturen 7 hindurch verlaufen. Diese Bohrungen können Gewinde aufweisen, so daß allein durch Schrauben 15 eine Befestigung aller Teile aneinander möglich ist.

An der Endarmatur 8 kann auf der freien Außenseite ein Manometer 16 oder eine andere Meßvorrichtung eingeschraubt sein. Ferner kann auch die Armatur 7 besonders auf der Oberseite eine Meßvorrichtung 17 tragen.

Die Rohrabschnitte können von zwei Halbschalen gebildet sein, die in einer Ebene aneinandergeschweißt sind, die rechtwinklig zur Vorderseitenebene der Leitungsplatte ist.

**Patentansprüche**

1. Lösbare Verbindung einer Armatur (7, 8), insbesondere eines Absperrorgans oder einer Meßvorrichtung mit einer Rohrleitung, die einen Zu- und Abführungsleitungsteil (1, 2) aufweist, die in einem Anschlußteil münden, **dadurch gekennzeichnet,**

   - daß das Anschlußteil eine ebene Platte (5) aufweist,

   - daß die Enden des Zu- und Abführungsteiles (1, 2) Mündungsöffnungen (3, 4) bilden, die in der den Leitungen abgewandten Vorderseite (6) der Platte (5) liegen, und

   - daß die Armatur (7, 8) mindestens eine ebene Seitenfläche (9, 11) besitzt, die unmittelbar an der Vorderseite (6) der Platte (5) anliegend befestigbar ist, wobei die Seitenwand bzw. Seitenfläche (9, 11) der Armatur eine Ein-und Auslaßöffnung (12, 13) besitzt, die mit den Mündungsöffnungen (3, 4) der Vorderseite (6) der Platte (5) übereinstimmen.

2. Verbindung nach Anspruch 1, **dadurch gekennzeichnet,** daß in der Vorderseite (6) der Leitungsplatte (5) mehrere Leitungen münden und die ebene Armaturenseitenfläche (9, 11) mehrere damit übereinstimmende Öffnungen (12, 13) besitzt.

3. Vorrichtung nach einem der vorherigen Ansprüche, **dadurch gekennzeichnet,** daß an der Armatur (7) auf der der Rohrleitung abgewandten Seite mindestens eine weitere Armatur (7) befestigt ist.

4. Vorrichtung nach Anspruch 3, **dadurch gekennzeichnet,** daß die Armaturen (7) jeweils zwei zueinander parallele Seitenflächen (9, 11) zum Anschluß aufweisen, die Ein- und Auslaßöffnungen (12, 13) aufweisen.

5. Vorrichtung nach einem der vorherigen Ansprüche, **dadurch gekennzeichnet,** daß die am weitesten außen befestigte Armatur (8) ein Gehäuse mit einem Umlenkkanal oder einer Kammer aufweist, der die Mündungsöffnungen oder die Öffnungen dazwischen geschalteter Armaturen (7) oder der Leitungsplatte (5) miteinander verbindet.

6. Vorrichtung nach einem der vorherigen Ansprüche, **dadurch gekennzeichnet,** daß die Armaturen (7) durch Bajonettverschluß an der Leitungsplatte (5) und/oder an Armaturen (7, 8) befestigt sind.

7. Vorrichtung nach einem der vorherigen Ansprüche, **dadurch gekennzeichnet,** daß zwischen der Armatur (7, 8) und der Leitungsplatte (5) ein Teil befestigt ist, das um ein mit dem Einlaß fluchtendes Rohr eine koaxiale Ringkammer bildet, die mit dem Auslaß und dem Einlaß der Verbrauchsvorrichtung verbindbar ist.

8. Vorrichtung nach einem der vorherigen Ansprüche, **dadurch gekennzeichnet,** daß alle scheibenförmigen Armaturen (7) um eine Achse klappsymmetrisch sind, die senkrecht zur Leitungsachse ist.

9. Vorrichtung nach einem der vorherigen Ansprüche, **dadurch gekennzeichnet,** daß auf der Rückseite der Leitungsplatte (5) Rohrabschnitte (1, 2) befestigt sind, die an die Leitungsenden angeschweißt, angeschraubt oder angelötet sind.

10. Vorrichtung nach einem der vorherigen Ansprüche, **dadurch gekennzeichnet,** daß die Armatur (7, 8) ein Absperrorgan, eine Meßvorrichtung, ein Entlüfter, ein Schmutzfänger, ein Vordrallregler, ein Strömungsteiler, ein Mischer, ein Vorratsbehälter oder ein Heizgerät ist.

11. Vorrichtung nach einem der vorherigen Ansprüche, **dadurch gekennzeichnet,** daß die Zu-und Abführungsleitungsteile (1, 2) auf der Rückseite der Leitungsplatte (5) durch ein Profil, insbesondere ein Flachprofil (18), aneinander befestigt sind.

12. Vorrichtung nach einem der Ansprüche 1 bis 10, **dadurch gekennzeichnet,** daß die Rohrabschnitte (1, 2) von zwei Halbschalen (19, 20) gebildet sind, die in einer Ebene (E) aneinandergeschweißt sind, die rechtwinklig zur Vorderseitenebene der Leitungsplatte (5) ist.

## Claims

1. A releasable connection of a fitting (7, 8), more particularly a shutoff member or a measuring device, to a pipe, which has a supply portion (1) and a discharge portion (2) which discharge into a connection portion, characterized in that
   - the connection portion has a flat plate (5),
   - the ends of the supply and discharge portions (1,2) form discharge openings (3, 4) disposed in the front side (6) of the plate (5) remote from the pipes, and
   - the fitting (7, 8) has at least one flat lateral surface (9, 11) which is attached bearing directly against the front side (6) of the plate (5), the lateral wall or surface (9, 11) of the fitting being formed with an inlet opening and an outlet opening (12, 13) which register with the discharge openings (3, 4) in the front side (6) of the plate (5).

2. A connection according to claim 1, characterized in that a number of pipes discharge in the front side (6) of the pipe plate (5), and the flat lateral surface (9, 11) of the fitting is formed with a number of openings (12, 13) registering therewith.

3. A device according to one of the preceding claims, characterized in that at least one further fitting (7) is attached to the fitting (7) on the side remote from the pipe.

4. A device according to claim 3, characterized in that the fittings (7) each have two parallel lateral surfaces (9, 11) for connection which are formed with an inlet opening and an outlet opening (12, 13).

5. A device according to one of the preceding claims, characterized in that the fitting (8) attached furthest on the outside has a casing having a deflecting channel or a chamber which interconnects the discharge openings or the openings of fittings (7) connected therebetween or of the plate (5).

6. A device according to one of the preceding claims, characterized in that the fittings (7) are attached to the plate (5) and/or to fittings (7, 8) by a bayonet-type closure.

7. A device according to one of the preceding claims, characterized in that attached between the fittings (7, 8) and the pipe plate (5) is a part forming around a pipe in alignment with the inlet a coaxial annular chamber which can be connected to the outlet and inlet of the apparatus using the device.

8. A device according to one of the preceding claims, characterized in that all the disc-shaped fittings (7) are hingeably symmetrical around an axis which is perpendicular to the axis of the pipe.

9. A device according to one of the preceding claims, characterized in that attached to the rear side of the pipe plate (5) are tube portions (1, 2) which are welded, screwed or soldered to the ends of the pipe.

10. A device according to one of the preceding claims, characterized in that the fitting (7, 8) is a shutoff member, a measuring device, an exhaust fan, a dirt trap, an initial whirl controller, a flow divider, a mixer, a storage tank or a heating apparatus.

11. A device according to one of the preceding claims, characterized in that the pipe supply and discharge portions (1, 2) are attached to one another on the rear side of the pipe plate (5) via a section, more particularly a flat section (18).

12. A device according to one of claims 1 to 10, characterized in that the pipe portions (1, 2) are formed by two half shells (19, 20) welded to one another in a plane (E) which is at right angles to the plane of the front side of the pipe plate (5).

**Revendications**

1. Raccord démontable d'une armature (7, 8), en particulier d'un organe d'arrêt ou d'un dispositif de mesure, avec une conduite tubulaire qui présente des pièces de conduite d'amenée et d'évacuation (1, 2) qui débouchent dans une pièce de raccordement,
caractérise en ce
   - que la pièce de raccordement présente une plaque plane (5),
   - que les extrémités des pièces d'amenée et d'évacuation (1, 2) forment des ouvertures débouchantes (3, 4) qui se trouvent dans la face avant (6) de la plaque (5) opposée aux conduites,
   - que l'armature (7, 8) possède au moins une face latérale plane (9, 11) qui peut être fixée directement adjacente à la face avant (6) de la plaque (5), la paroi latérale ou surface latérale (9, 11) de l'armature possédant des ouvertures d'entrée et de sortie (12, 13) qui coïncident avec les ouvertures débouchantes (3, 4) de la face avant (6) de la plaque (5).

2. Raccord selon la revendication 1,
caractérisé en ce que plusieurs conduites débouchent dans la face avant (6) de la plaque de conduite (5) et la surface latérale plane (9, 11) d'armature présente plusieurs ouvertures (12, 13) coïncidant avec elles.

3. Dispositif selon l'une des revendications précédentes,
caractérisé en ce qu'au moins une autre armature (7) est fixée a l'armature (7) sur la face opposée à la conduite tubulaire.

4. Dispositif selon la revendication 3,
caractérisé en ce que les armatures (7) présentent respectivement deux surfaces latérales (9, 11) parallèles entre elles pour le raccordement, qui présentent des ouvertures d'entrée et de sortie (12, 13).

5. Dispositif selon l'une des revendications précédentes,
caractérisé en ce que l'armature (8) fixée le plus loin à l'extérieur présente un carter avec un canal de renvoi ou une chambre qui relie entre elles les ouvertures débouchantes ou les ouvertures d'armatures (7) intercalées ou de la plaque de conduite (5).

6. Dispositif selon l'une des revendications précédentes,
   caractérisé en ce que les armatures (7) sont fixées à la plaque de conduite (5) et/ou à des armatures (7, 8) par un verrouillage à baïonnette.

7. Dispositif selon l'une des revendications précédentes,
   caractérisé en ce qu'un pièce est fixée entre l'armature (7, 8) et la plaque de conduite (5), qui forme autour d'un tube aligné avec l'entrée une chambre annulaire coaxiale, laquelle peut être reliée à la sortie et à l'entrée du dispositif consommateur.

8. Dispositif selon l'une des revendications précédentes,
   caractérisé en ce que toutes les armatures (7) en forme de disques sont symétriques en pliage autour d'un axe qui est perpendiculaire à l'axe de conduite.

9. Dispositif selon l'une des revendications précédentes,
   caractérisé en ce que des sections tubulaires (1, 2) sont fixées sur la face arrière de la plaque de conduite (5) et sont soudées, vissées ou brasées aux extrémités de la conduite.

10. Dispositif selon l'une des revendications précédentes,
    caractérisé en ce que l'armature (7, 8) est un organe d'arrêt, un dispositif de mesure, un aspirateur, un collecteur d'impuretés, un régulateur de prérotation, un diviseur d'écoulement, un mélangeur, un réservoir ou un appareil de chauffage.

11. Dispositif selon l'une des revendications précédentes,
    caractérisé en ce que les pièces d'amenée et d'évacuation (1, 2) sont fixées l'une à l'autre sur la face arrière de la plaque de conduite (5) par un profilé, en particulier un profilé plat (18).

12. Dispositif selon l'une des revendications 1 à 10,
    caractérisé en ce que les sections tubulaires (1, 2) sont formées par deux demi-coquilles (19, 20) qui sont soudées l'une à l'autre dans un plan (E) qui est à angle droit avec le plan latéral avant de la plaque de conduite (5).

Fig. 1

Fig. 2

Fig. 3

Wärmezähler

Wärmezähler

Heizkessel
gleitend
gefahren

→ 18 x Rohrgewinde
schneiden und eindichten

→ 2 x Rohrverschraubung
mit Flachdichtung

→ 4 x Rohrschweißnaht

Fig.4

Fig.5